# EUROPEAN PATENT APPLICATION

(11) **EP 3 009 225 A1**
(43) Date of publication of application: **20.04.2016**
(21) Application number: 14382407.6
(22) Date of filing: 17.10.2014
(51) Int. Cl.: B23Q 1/01, B23Q 1/38, B23Q 11/00

(54) **Gantry machine tool with large horizontal support crossbeam with horizontal counterbalancing device**

(71) Applicant: Bostek Innovation S.L.U., 20159 Asteasu (Gipuzkoa) (ES)
(72) Inventor: Dravasa Gurruchaga, Juan José, 20159 Asteasu-Gipuzkoa (ES); García Calderón, Emilio, 20159 Asteasu-Gipuzkoa (ES)
(74) Representative: Stiebe, Lars Magnus

(57) **Abstract**

The machine comprises two vertical columns (1), a horizontal support crossbeam (3) displaceable vertically in a Z vertical direction, in a guided manner in the two vertical columns (1), and at least one carriage (4) that holds a tool holder head (6), the support crossbeam (3) comprising a longitudinal guide (32) on which the carriage can slide in a Y direction. The carriage (4) comprises at least two hydrostatic cells (511, 512) configured to provide a film of hydrostatic fluid on the longitudinal guide (32), the hydrostatic cells (511, 512) being separated in the Y direction. The flow of hydrostatic fluid provided by at least one of the hydrostatic cells (511, 512) can be varied to cause an angular displacement of the carriage (4) with respect to the support crossbeam (3) in a ZY vertical plane.

## Description

### TECHNICAL FIELD

The present invention is encompassed within the field of machine tools and more specifically within the field of gantry machine tools with a large support crossbeam and that comprise counterbalancing devices or systems for the deviations in the position of the support crossbeam due to the weight of the tool holder head.

### BACKGROUND OF THE INVENTION

Gantry machine tools (composed of two vertical columns and a horizontal joist), fixed or mobile, comprise a support crossbeam displaceable vertically along two vertical columns or poles arranged at the ends of a rotating plate or working table where the workpieces can be placed. On the support crossbeam a sliding carriage is mounted in a movable manner in the horizontal direction, which holds a tool holder head that can move vertically to work on the workpiece.

The support crossbeam is mounted in a sliding manner on the columns through guides provided in the columns and is vertically actuated by means of respective spindles actuated by the corresponding motors.

The tool holder head is mounted on the support crossbeam through a carriage that can slide on longitudinal guides of the support crossbeam such that it can move horizontally on the support crossbeam. In some occasions there are two tool holder heads, which can move on their corresponding carriage.

In large machine tools the support crossbeam is very long (and therefore the span of the support crossbeam between the two posts is very large) due to which the weight of the support crossbeam produces a deformation (bending) of the support crossbeam in the perpendicular direction with respect to the support crossbeam, which is therefore not completely horizontal. This deformation causes a descent of the tool holder head with respect to the theoretical vertical position and a rotation of the position of the head (except in positions near the center of the support crossbeam). This makes the work axis of the head not to be perfectly vertical but to be angularly offset. This angular displacement is also variable and depends on the position of the head with respect to the posts. In addition, it should be noted that the weight of the head increases the bending of the support crossbeam to a greater extent when the head is closer to the central positions of the support crossbeam.

There are counterbalancing systems that attempt to correct the deformation and lack of horizontality of the support crossbeam. For example, systems that use tension cables tied to the support crossbeam at several points and counterweights that can pull the support crossbeam upward to counterbalance its deformation are known. In order to calculate the tension required to be applied, they comprise measurement devices (rulers) that allow knowing the curvature of the support crossbeam or the length it has fallen with respect to the theoretical position. In this regard, we can cite patents DE 2328404, EP-A1-2 363 236 and GB 938,947, for example.

Even though these systems help to counterbalance the bending of the support crossbeam, they suffer from lack of precision; that is to say, it is difficult for them to achieve precisions above a tenth of a millimeter. In addition, it is possible for deviations of position between the sliding carriage holding the head and the guide of the support crossbeam to occur, which also cause the position of the tool not to be as expected. There are no known counterbalancing systems that make it possible to address the full problem of the deviation of the position of the head, and therefore of the tool.

The counterbalancing system of the invention is not aimed at attempting to solve the bending of the support crossbeam; rather, it makes it possible to correct the position of the tool holder head in order for it to approach the theoretical position with great precision.

### DESCRIPTION OF THE INVENTION

The object of the invention is a machine tool that comprises a counterbalancing system that makes it possible to correct or counterbalance the position of one or several tool holder heads, especially in machines with a large horizontal support crossbeam. The machine tool comprises a horizontal support crossbeam displaceable vertically (according to a Z vertical direction) along two vertical columns and at least one carriage that supports a tool holder head. The support crossbeam comprises a longitudinal guide on which the carriage can slide in a Y horizontal direction.

According to the present invention, the aforementioned carriage comprises at least two hydrostatic cells configured to provide a film of hydrostatic fluid between the carriage and a horizontal surface of the longitudinal guide, the hydrostatic cells being separated in the Y horizontal direction. The machine comprises control means of the flow of hydrostatic fluid that can vary the flow of hydrostatic fluid provided to at least one of the hydrostatic cells to cause an angular displacement of the carriage with respect to the support crossbeam in a ZY vertical plane.

The hydrostatic cells, also known as hydrostatic guides or hydrostatic guideways, are constituted by a housing exhibiting a flat perimeter edge. A hydrostatic fluid (oil, for example) is injected under pressure through one or more holes, filling the housing. If the pressure is maintained, the fluid overflows the edges of the housing, forming a thin film between the perimeter edges of the cell and the surface of the longitudinal guide facing the cell.

According to the invention, if the flow of hydrostatic volume is varied in one of the cells, for example, if the flow increases, the thickness of the film of hydrostatic fluid in that cell increases such that the carriage is lifted (at the area where the cell is located) with respect to the longitudinal guide of the support crossbeam, causing a rotation of the carriage with respect to the other hydrostatic cell.

It has been also provided that the flow of hydrostatic fluid can vary in both cells. Therefore, the angular displacement of the carriage can be achieved by varying only one of the flows of fluid (the first or the second), or by varying both flows simultaneously. In this last case, the angular displacement of the carriage will depend on the combination of the variations of the first and second flow of hydrostatic fluid.

In a preferred embodiment, the longitudinal guide comprises an upper guiding surface and a lower guiding surface (upper and lower meaning its position with respect to the Z vertical direction, that is to say, the upper guide is farther from the ground than the lower guide). These upper and lower surfaces can be an upper surface and a lower surface of a single longitudinal element or guide or be part of two independent elements or guides constituting the longitudinal element or guide of the support crossbeam. Thus, the carriage moves longitudinally (in the Y horizontal direction) guided by the two upper and lower surfaces. In this embodiment, the carriage comprises:
a first hydrostatic guide, which comprises an upper cell and a lower cell hydraulically connected to each other, the upper cell facing the upper guiding surface and the lower cell facing the lower guiding surface, and
a second hydrostatic guide, which comprises an upper cell and a lower cell hydraulically connected to each other, the upper cell facing the upper guiding surface and the lower cell facing the lower guiding surface.

Thus, since each upper cell is connected to its corresponding lower cell, an increase in the flow of hydrostatic fluid of the upper cell produces a decrease in the flow of hydrostatic fluid of the lower cell, and a decrease in the flow of hydrostatic fluid of an upper cell produces an increase in the flow of hydrostatic fluid of the corresponding lower cell.

According to the invention, the flow of hydrostatic fluid in at least one of the guides can vary, for example, by increasing the flow in the first guide and by decreasing or keeping stable the flow in the second guide or vice versa to cause a rotation of the sliding carriage with respect to the support crossbeam (in a YZ plane parallel to the plane containing the longitudinal guide). The rotation will be in one or the other direction depending on whether the flow of hydrostatic fluid increases in the first hydrostatic guide or in the second hydrostatic guide. That is to say, in order to produce a rotation of the sliding carriage, the flow of hydrostatic fluid in one of the hydrostatic guides is modified (increased or decreased) as required to counterbalance the misalignment of the carriage and/or the tool holder head.

The front and rear hydrostatic guides can be fluidly connected to independent supply means of a hydrostatic fluid configured to selectively supply a greater flow of hydrostatic fluid to one of the guides or cells (and a smaller flow to at least another of the guides or cells) to correct the position of the tool holder head with respect to the support crossbeam (the position of the sliding carriage is corrected, and in consequence, the position of the head). The supply means can provide, for example, a greater flow of fluid to the upper cell of the first guide such that the sliding carriage is lifted to a certain height, proportional to the flow of fluid in the area of the first cell, which produces a rotation of the sliding carriage in a direction in the YZ plane and therefore of the head, or can provide a greater flow of hydrostatic fluid to the upper cell of the second guide such that the head is lifted to a certain height, proportional to the flow of hydrostatic fluid in the area of the second cell, which produces a rotation in the opposite direction of the head. Thus, by modifying the flow of hydrostatic fluid in the upper cells of the first or second guide, misalignments of the support crossbeam can be corrected.

The supply means can be configured to provide a greater flow of hydrostatic fluid to one of the upper cells or guideways while the pressure of the fluid is maintained in the hydrostatic guide. Generally, the lower cells or guideways contain hydrostatic fluid to withstand the force exerted by the hydrostatic fluid on the upper cell or guideway, but are not used for varying the position of the head.

The hydrostatic guides can comprise a front guideway or cell and a rear guideway or cell for the guiding of the sliding carriage with respect to the support crossbeam in the transversal direction with respect to the forward displacement of the support crossbeam. These guideways are not used for the counterbalancing of the position of the head.

The machine tool can comprise additional hydrostatic guides for the sliding with respect to an additional longitudinal guiding element of the support crossbeam (for example, an additional longitudinal lane extending substantially along the entire length of the support crossbeam) parallel to the longitudinal guide and located at a different height in the Z direction than the longitudinal guide. In this embodiment, the carriage comprises an additional front cell or guideway and an additional rear guideway or cell for the guiding of the sliding carriage with respect to the support crossbeam (in the transversal direction with respect to the forward displacement of the support crossbeam). These front and rear guideways are not used for the counterbalancing of the position of the head. This additional hydrostatic system can comprise additional cells for the counterbalancing of the position of the sliding carriage in a similar manner than the one described for the front and rear cells.

The machine tool can comprise a level device that can determine the angular displacement of the carriage with respect to the support crossbeam.

The machine tool can comprise a hydraulic counterbalancing device to counterbalance the weight of the support crossbeam. This hydraulic counterbalancing device can comprise two hydraulic drive cylinders, a first drive cylinder connected at a first end of the support crossbeam that can push upward the aforementioned first end and a second drive cylinder connected at a second end of the support crossbeam that can push upward the aforementioned second end. The first and second ends of the support crossbeam are in a position that is farther away from the center of the support crossbeam than the respective vertical column.

The first and second drive cylinders can be configured to simultaneously push the first and second ends of the support crossbeam with a total force equivalent to the weight of the support crossbeam. Thus, they allow the vertical displacement of the support crossbeam with respect to the vertical columns to be carried out as if the support crossbeam had an equivalent weight of zero.

It has also been provided that the first and second drive cylinders can be configured to push the first and second ends of the support crossbeam individually in order to correct deviations of the machine tool (straightening the gantry) that could have been produced due to differences in the pushing force of the motors of the vertical columns that cause the gantry to be completely misaligned with respect to the vertical line. Acting on the first or second drive cylinder, an upward force is exerted on the support crossbeam and in consequence on the entire gantry, which corrects the deviation of the gantry.

The piston rod of the drive cylinders can be joined to the support crossbeam by means of a bolt that crosses through a hole of the end of the piston rod, configuring an attachment with a degree of freedom. The end of the drive cylinders can be partially housed in a housing provided in the lower part of the support crossbeam.

The machine tool can comprise a tensioner actuator tied to the horizontal support crossbeam in its central part to counterbalance the weight of the at least one tool holder head. The tensioner actuator preferably comprises two tensioner hydraulic cylinders tied to the horizontal support crossbeam to tension the support crossbeam upward. The piston rod of the hydraulic cylinders can be tied to the support crossbeam in its central part and the body of the cylinders affixed to an auxiliary beam. This auxiliary beam is affixed to the support crossbeam in two end points thereof in proximity to the position of the vertical columns.

The two tensioner hydraulic cylinders are configured to tension with more or less force depending on the longitudinal position of the at least one tool holder head in the support crossbeam. Thus, it is possible to correct deviations in the position of the support crossbeam (bending) due to its weight and due to the weight and position of the tool holder head or heads.

The machine can also comprise a support beam extending longitudinally in the Y direction in parallel to the horizontal support crossbeam and on which the sliding carriage rests in a sliding manner to reduce the weight withstood by the support crossbeam during the displacement of the sliding carriage along the support crossbeam. The carriage can hang from the support beam (by means of pulley wheels or sliding wheels) such that virtually most of the weight of the carriage and of the tool holder head is supported by the support beam, while the longitudinal guide of the support crossbeam and therefore the support beam virtually do not support the weight of the carriage and of the tool holder head.

The machine tool can comprise a measurement ruler (a clock or any precision measuring device) for measuring the longitudinal position of the tool holder head in its displacement with respect to the support crossbeam.

The operation of these tensioner hydraulic cylinders would be more or less the following: the tool holder head moves (by means of the corresponding sliding carriage) on the horizontal support crossbeam and measurements are taken (by means of the ruler) of the position of the tool. The tensioner hydraulic cylinders are activated at the measurement points until the deviations (with the highest degree of precision possible) of the position of the support crossbeam, and therefore of the head and tool, are corrected. The data of the deviation, position and force of the tensioner hydraulic cylinders are stored. This operation is carried out in several points of the support crossbeam and in different positions of the tool holder head or heads. These data are supplied to a computer system or the numeric control of the machine such that the correction of deviations can be carried out in a dynamic manner, that is to say, when the machine is in operation. The numeric control, depending on the position of the tool holder head or heads, activates the tensioner hydraulic cylinders automatically to correct the deviation of the support crossbeam.

Once this correction is carried out, the machine can carry out the correction by means of the cells of the hydrostatic guides allowing for greater precision.

### BRIEF DESCRIPTION OF THE DRAWINGS

In order to supplement the description and with the purpose of facilitating a better comprehension of the characteristics of the invention according to a preferred example of a practical embodiment thereof, a set of figures is attached as an integral part of the description representing the following in an illustrative rather than limiting manner:
Figure 1 is a front view of a machine tool according to a possible embodiment of the invention.
Figure 2 is a perspective of the machine of figure 1.

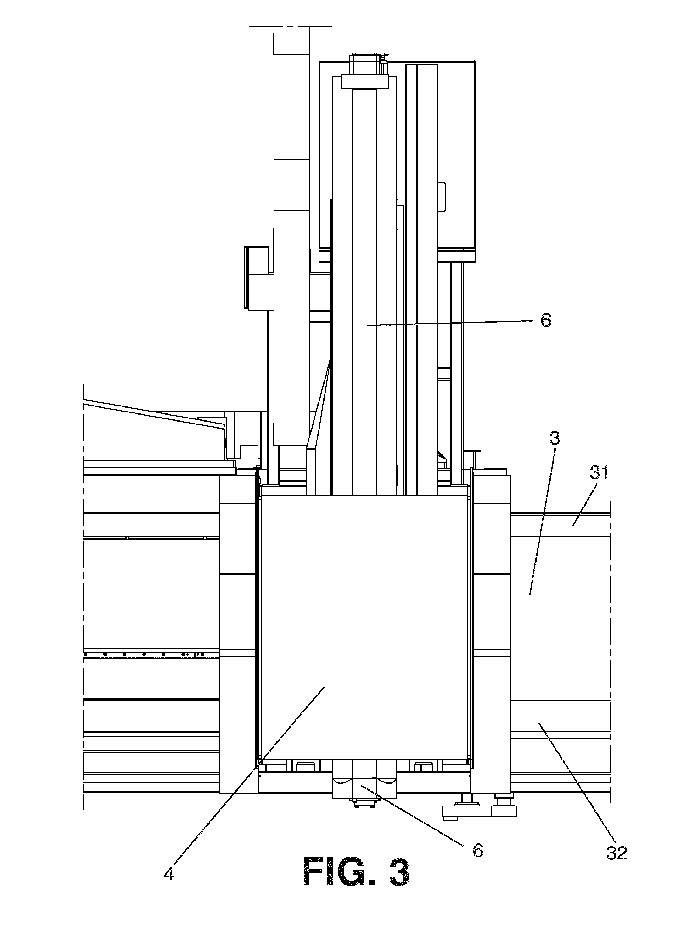

Figure 3 is a partial representation of the figure to show the sliding carriage holding the tool holder head in detail.
Figure 4 is a partial profile representation of the machine to show the sliding carriage, the support crossbeam and the hydrostatic guides in detail.

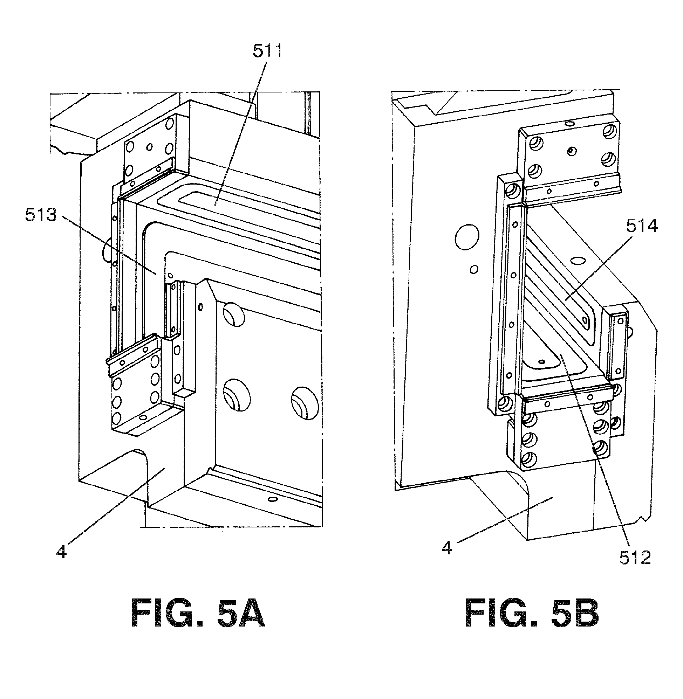

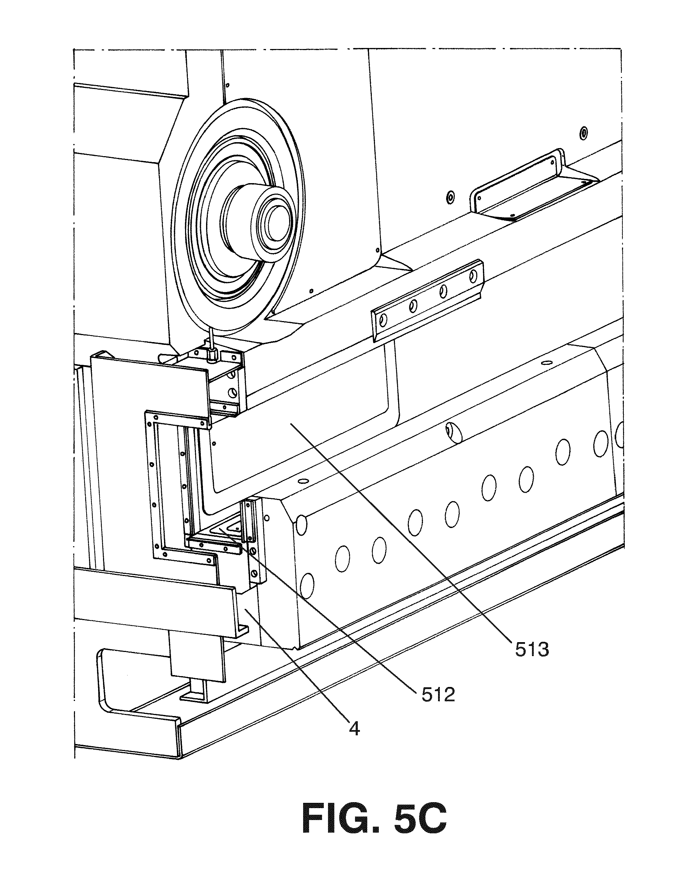

Figures 5A, 5B and 5C are perspective representations of the carriage to show the hydrostatic cells.
Figure 6 is a schematic representation of the operation of a hydrostatic cell.
Figure 7 is a schematic representation of the longitudinal guide, the carriage and the counterbalancing device of the invention.
Figure 8 is a partial cross-sectional representation of a hydraulic counterbalancing device to counterbalance the weight of the support crossbeam.
Figure 9 is a partial cross-sectional representation of a hydraulic counterbalancing cylinder.

### PREFERRED EMBODIMENT OF THE INVENTION

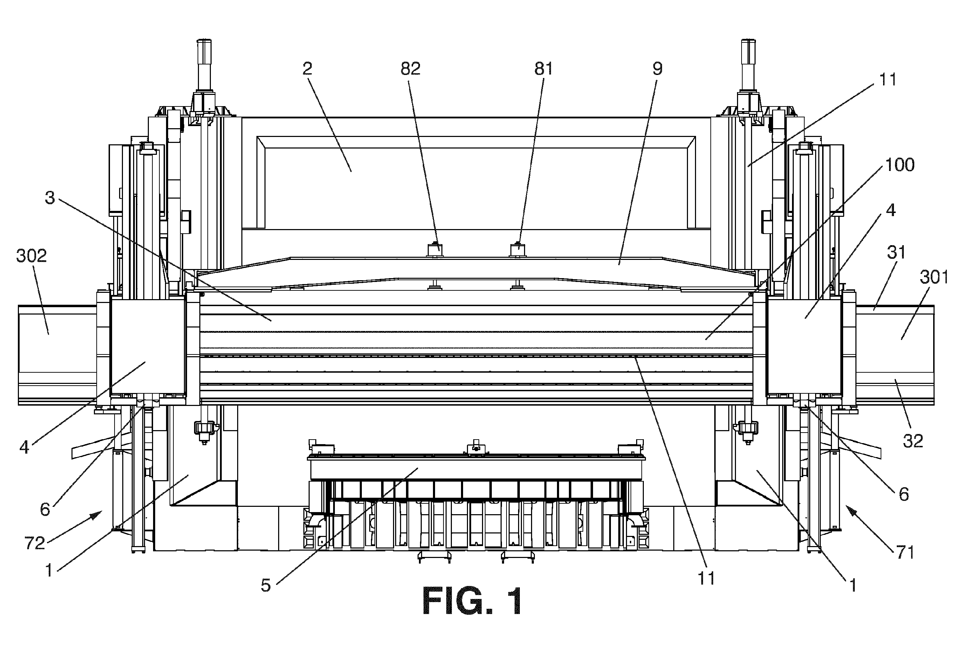

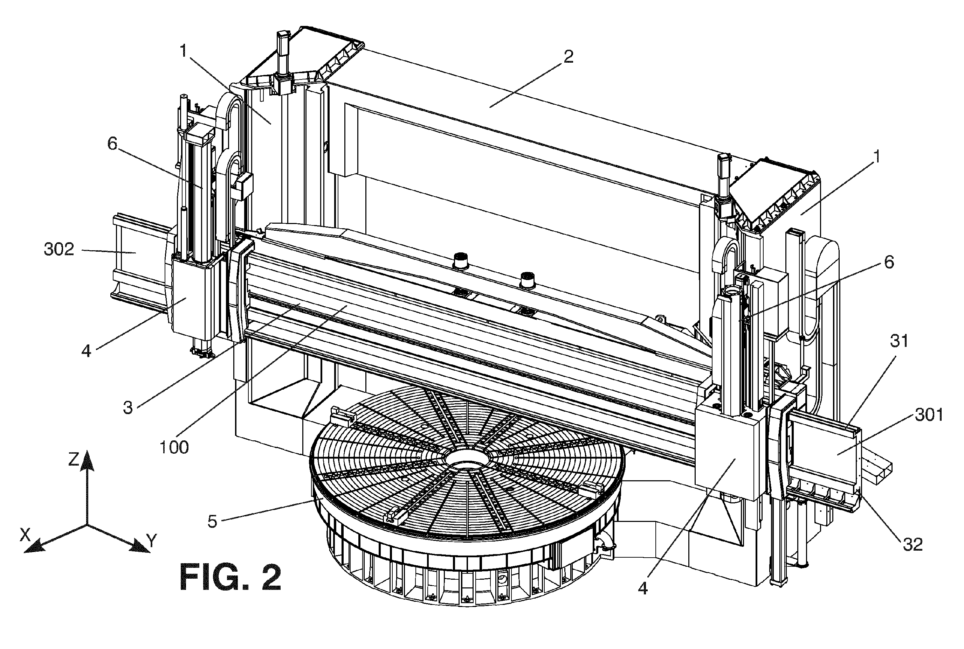

Figures 1 and 2 illustrate a machine tool according to an embodiment of the invention that comprises two vertical columns (1) joined superiorly by a joist (2), a horizontal support crossbeam (3) that can move vertically (according to the Z direction) along the vertical columns (1) by means of respective actuators (11) and two carriages (4) that can slide (in the Y direction) along two longitudinal lanes or guides (31, 32) of the aforementioned horizontal support crossbeam (3). Each carriage (4) holds a tool holder head (6) that can work on a workpiece (not represented) arranged on a rotating table (5).

The sliding carriages (4) comprise hydrostatic guides (51, 52) to allow the sliding between the carriages (4) and the horizontal support crossbeam (3).

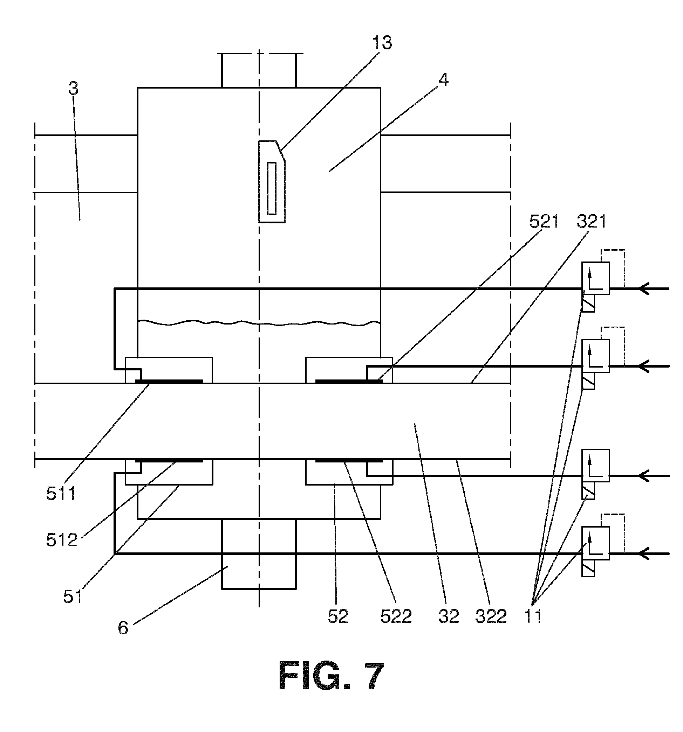

Each carriage (4) comprises a first hydrostatic guide (51) and a second hydrostatic guide (52), separated with respect to the Y direction, that is to say, when the carriage (4) slides on the horizontal support crossbeam (3) towards the Y direction, one of the guides (51, 52) is farther ahead than the other with respect to said direction and vice versa in the opposite direction. Each of the guides (51, 52) comprises an upper cell or guideway (511, 521) and a lower cell or guideway (512, 522), the upper and lower cell of each guide facing each other, one above the longitudinal lane (32) of the support crossbeam (3) and another below the longitudinal lane (32). Specifically, the upper cells (511, 521) face an upper guiding surface (321) of the longitudinal guide (32) and the lower cells (521, 522) face a lower guiding surface (322) of the longitudinal guide (32). The upper (312) and lower guiding surfaces (322) can be part of the same guiding element or rather, independent guiding elements. Thus, as shown in figure 7, there is a first upper cell (511), a first lower cell (512), a second upper cell (521) and a second lower cell (522).

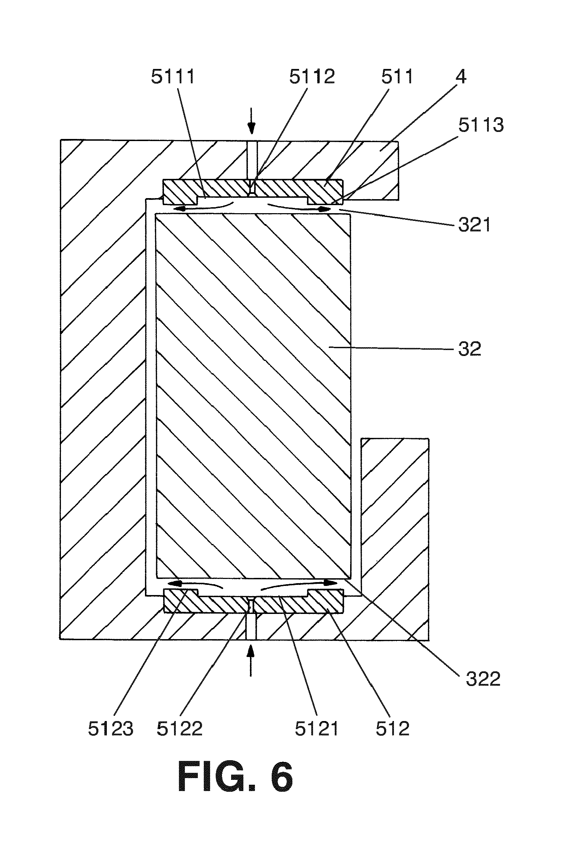

Figure 6 shows the operation of the hydrostatic cells (511, 512) schematically. Each cell or guideway (511, 512) is formed by a housing (5111, 5221), in which hydrostatic fluid is injected under pressure through one or several holes (5112, 5122), such that when the flow of fluid fills the housing (5111, 5121), it overflows the edges (5113, 5123), creating a film of fluid between the edges (5113, 5123) of the hydrostatic cell (511, 512) and the guide (32).

Each hydrostatic cell (51, 52), and therefore, its upper (511, 512) and lower cells (521, 522), is fluidly connected to control means (12) of the flow of a hydrostatic fluid, the control means (12) of the flow being configured to supply a greater flow of fluid to at least one of the guideways or cells (511, 512, 521, 522) to correct the position of the tool holder head (6) with respect to the support crossbeam (3). Thus, for example, taking as reference figure 7, if a greater flow is supplied to the first upper cell (511) than to the other cells (512, 521, 522), this greater volume in the first upper cell (511) moves the carriage (4), making it rotate slightly clockwise. If, for example, greater pressure is supplied to the second upper cell (521) than to the other cells (511, 512, 522), this greater volume moves the sliding carriage (4), making it rotate slightly counterclockwise. Obviously, depending on need, the flow of fluid supplied to one or several cells can be varied.

The machine comprises a level device (13) that can determine the angular displacement of the carriage (4) with respect to the support crossbeam (3).

The hydrostatic guides (51, 52) also comprise front (513, 523) and rear cells (514, 524), which allow the displacement of the carriages (4) with respect to the support crossbeam (3) but are not used for the counterbalancing of the position of the heads (6).

The sliding carriages comprise additional hydrostatic guides (61, 62) that allow the displacement of the carriage (4) with respect to an additional upper guide (31) of the support crossbeam (3). This additional upper guide (31) is located at a greater height of the longitudinal guide (32). These additional hydrostatic guides (61, 62) comprise an upper cell or guideway (611, 621) and a lower cell or guideway (612, 622), the upper and lower cell of each guide facing each other, one above the longitudinal guide (31) of the horizontal support crossbeam (3) and another below the longitudinal guide (31). These cells (611, 612, 621, 622) can be used similarly to the cells of the hydrostatic guides (51, 52) to counterbalance the position of the tool holder head (6). The additional hydrostatic guides (61, 62) also comprise front (613, 623) and rear cells (614, 624) that allow the sliding of the sliding carriage (4) with respect to the support crossbeam (3) but are not used for the counterbalancing of the position of the heads (6).

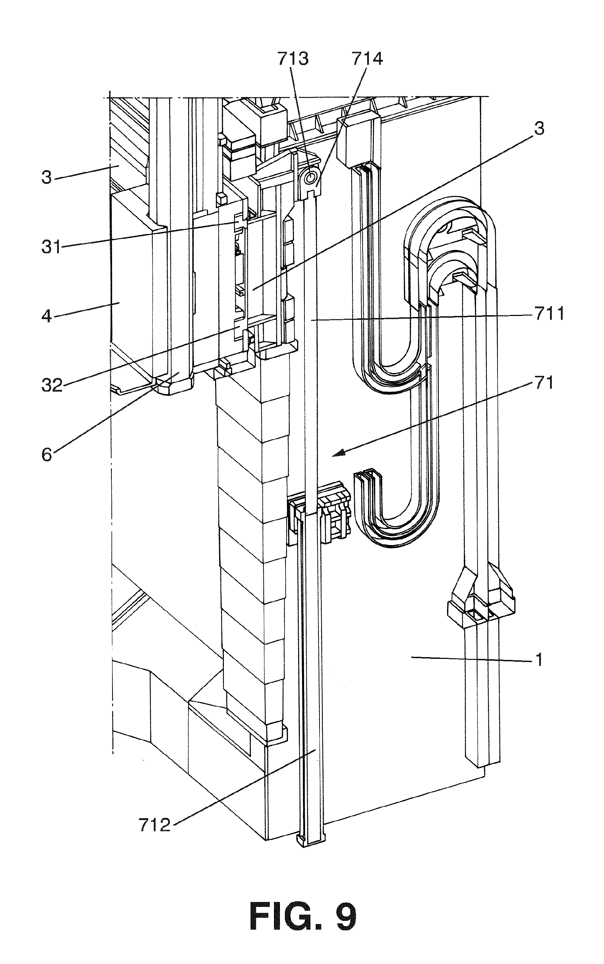

Figures 1 and 9 show a first drive cylinder (71) connected at a first end (301) of the horizontal support crossbeam (3) that can push the aforementioned end (301) upward, and a second drive cylinder (72) connected at a second end (302) of the support crossbeam (3) that can push the aforementioned end (302) upward, the first (301) and second ends (302) of the horizontal support crossbeam (3) being farther away from the center of the support crossbeam (3) than the respective vertical column (1). The first drive cylinder (71) and the second drive cylinder (72) are configured to push the first end (301) and the second end (302) of the support crossbeam (3) simultaneously with a total force equivalent to the weight of the support crossbeam (3).

The first and second drive cylinders (71, 72) comprise a piston rod (711, 721) and a cylinder body (712, 722). The piston rod (711, 712) is joined to the support crossbeam (3) by means of a bolt (713, 723), which passes through a hole of a ball joint end (714, 724) arranged at the end of the piston rod (71, 72), configuring an attachment with a degree of freedom.

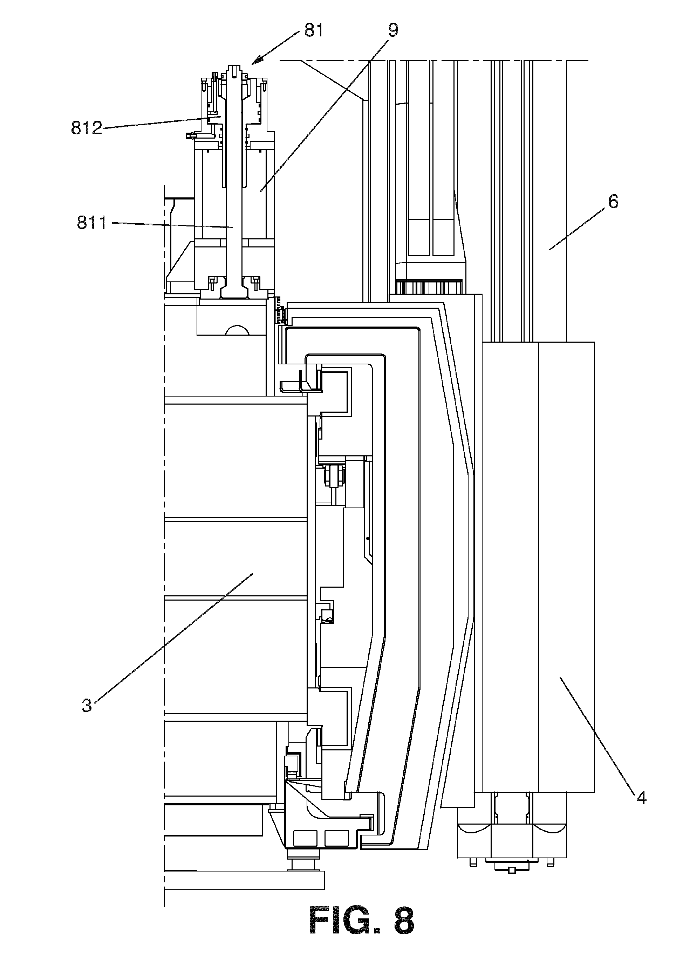

As shown in particular in figure 8, the machine tool comprises a tensioner actuator that comprises two tensioner hydraulic cylinders (81, 82), which piston rod (811, 821) is tied to the horizontal support crossbeam (3) in its central part, and the piston (812, 822) of the tensioner cylinders (81, 82) is tied to an auxiliary beam (9) affixed to the support crossbeam (3) in two end points thereof, that is to say, in proximity to the vertical columns (1). These tensioner hydraulic cylinders (81, 82) serve to tension the support crossbeam (3) upward in its central part to counterbalance the weight of the tool holder heads (4).

The two tensioner hydraulic cylinders (81, 82) are configured to tension with more or less force depending on the longitudinal position of the tool holder heads (4) in the support crossbeam (3).

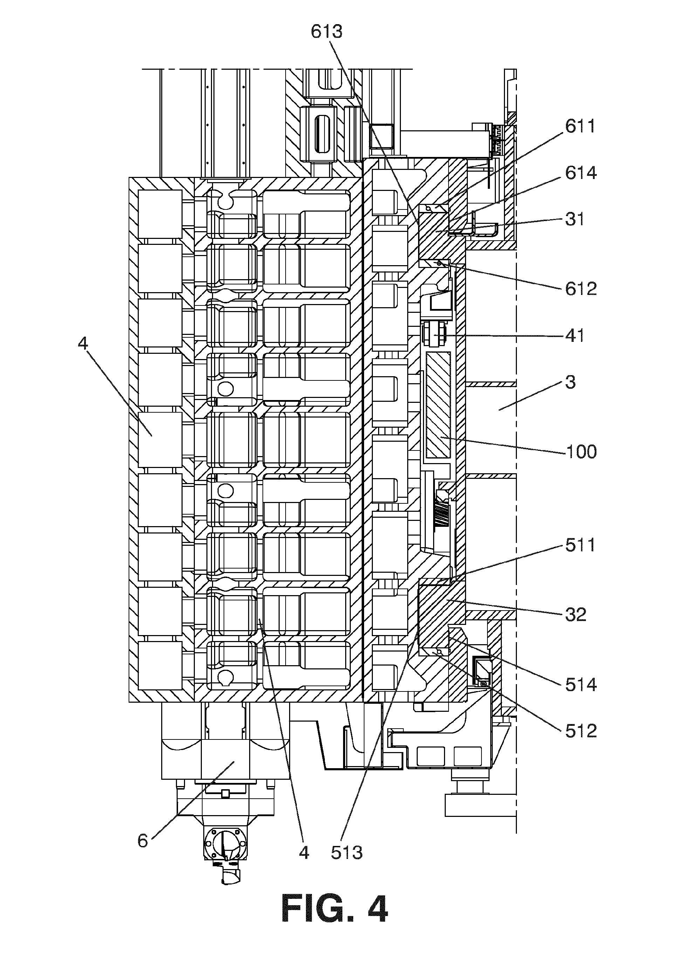

As shown in figures 1 and 4, the machine of the invention comprises a support beam (100) on which the carriages (4) rest through pulley wheels (41) to receive a part of the weight of the carriages (4) and the tool holder heads (6). This prevents the horizontal support crossbeam (3) from having to support the whole weight and therefore reduces the deformation thereof.

The machine comprises a measurement ruler (33) for measuring the longitudinal position of the tool holder head in its displacement with respect to the support crossbeam.

In this text, the word "comprises" and its variants (such as "comprising", etc.) such not be interpreted in an excluding manner, that is to say, they do not exclude the possibility that what is described includes other elements, steps, etc.

On the other hand, the invention is not limited to the specific embodiments described herein, but also covers, for example, the variants that could be carried out by an average expert in the art (for example, in terms of the selection of materials, dimensions, components, configuration, etc.) within what is deduced from the claims.

## Claims

1. Machine tool that comprises two vertical columns (1), a horizontal support crossbeam (3) displaceable vertically in a (Z) vertical direction, in a guided manner in the two vertical columns (1), and at least one carriage (4) that holds a tool holder head (6), the support crossbeam (3) comprising a longitudinal guide (32) on which the carriage can slide in a (Y) horizontal direction, **characterized in that** the carriage (4) comprises at least two hydrostatic cells (511, 512) configured to provide a film of hydrostatic fluid between the carriage (4) and a horizontal surface of the longitudinal guide (32), the hydrostatic cells (511, 512) being separated in the Y horizontal direction, and **in that** it comprises control means (12) of the flow of hydrostatic fluid, that can vary the flow of hydrostatic fluid provided to at least one of the cells (511, 512) to cause an angular displacement of the carriage (4) with respect to the support crossbeam (3) in a ZY vertical plane.

2. Machine tool according to claim 1, wherein the longitudinal guide (32) comprises an upper horizontal guiding surface (321) and a lower horizontal guiding surface (322), and the carriage (4) comprises:
a first hydrostatic guide (51), which comprises an upper cell (511) and a lower cell (512) hydraulically connected to each other, the upper cell (511) facing the upper guiding surface (312) and the lower cell (512) facing the lower guiding surface (322),
a second hydrostatic guide (52), which comprises an upper cell (521) and a lower cell (522) hydraulically connected to each other, the upper cell (521) facing the upper guiding surface (312) and the lower cell (522) facing the lower guiding surface (322); the first hydrostatic guide being separated from the second hydrostatic guide in the Y horizontal direction.

3. Machine tool according to any one of the preceding claims, wherein the carriage (4) comprises front (513, 523) and rear cells (514, 524) for the guiding of the displacement of the carriage (4) with respect to the support crossbeam (3).

4. Machine tool according to any one of the preceding claims, wherein the carriage (4) comprises additional hydrostatic guides (61, 62) for the sliding with respect to an additional longitudinal guiding element (31) of the support crossbeam (3) parallel to the longitudinal guide (32) and located at a different height in the Z direction than the longitudinal guide (32).

5. Machine tool according to any one of the preceding claims, which comprises a level device (13) that can determine the angular displacement of the carriage (4) with respect to the support crossbeam (3).

6. Machine tool according to any one of the preceding claims, which comprises a hydraulic counterbalancing device (71) to counterbalance the weight of the support crossbeam (3).

7. Machine tool according to claim 6, wherein the hydraulic counterbalancing device (71) comprises two hydraulic drive cylinders, a first drive cylinder (71) connected at a first end (301) of the support crossbeam (3) that can push the aforementioned end (301) upward, and a second drive cylinder (72) connected at a second end (302) of the support crossbeam (3) that can push the aforementioned end (302) upward, the first (301) and second (302) ends of the support crossbeam (3) being farther away from the center of the support crossbeam (3) than the respective vertical column (1).

8. Machine tool according to any one of the claims 6 or 7, wherein the first drive cylinder (71) and the second drive cylinder (72) are configured to push the first end (301) and the second end (302) of the support crossbeam (3) simultaneously with a total force equivalent to the weight of the support crossbeam (3).

9. Machine tool according to any one of the claims 6 to 8, wherein the drive cylinders (71, 72) comprise a piston rod (711, 721) joined to the support crossbeam (3) by means of a bolt (713, 723), which passes through a hole of the end (714, 724) of the piston rod (711, 721), configuring an attachment with a degree of freedom.

10. Machine tool according to any one of the preceding claims, which comprises a tensioner actuator tied to the support crossbeam (3) in its central part to counterbalance the weight of the at least one sliding carriage (4) and tool holder head (6).

11. Machine tool according to claim 10, wherein the tensioner actuator preferably comprises two tensioner hydraulic cylinders (81, 82) tied to the support crossbeam (3) to tension the support crossbeam (3) upward.

12. Machine tool according to any one of the claims 10 or 11, wherein the two tensioner hydraulic cylinders (81, 82) are configured to tension with more or less force depending on the longitudinal position of the at least one carriage (4) in the support crossbeam (3).

13. Machine tool according to any one of the claims 10 or 12, wherein the tensioner hydraulic cylinder (81, 82) comprises a piston rod (811, 821) which is tied to the support crossbeam (3) in its central part, and a body (813, 823) which is tied to an auxiliary beam (9) affixed on the support crossbeam (3) in two end points thereof, that is to say, in the proximity to the vertical columns (1).

14. Machine tool according to any one of the preceding claims, which comprises a support beam (100), parallel to the horizontal support crossbeam (3), on which the carriages (4) rest through pulley wheels (41) to receive a part of the weight of the carriages (4) and the tool holder heads (6).

15. Machine tool according to any one of the preceding claims, which comprises a measurement ruler (33) for measuring the longitudinal position of the tool holder head in its displacement with respect to the support crossbeam.
